# EUROPEAN PATENT SPECIFICATION

(11) **EP 2 818 388 B1**
(45) Date of publication and mention of the grant of the patent: **02.03.2016**
(21) Application number: 14174627.1
(22) Date of filing: 27.06.2014
(51) Int. Cl.: B62D 25/10, B62D 49/06, B60K 15/067

(54) **Tractor**
Traktor
Tracteur

(30) Priority: 28.06.2013 JP 2013137178
(43) Date of publication of application: 31.12.2014
(73) Proprietor: Iseki & Co., Ltd., Matsuyama-shi, Ehime 799-2692 (JP)
(72) Inventor: Ishioka, Narutoshi, Iyo-gun, Ehime 791-2193 (JP); Matsukawa, Teruki, Iyo-gun, Ehime 791-2193 (JP)
(74) Representative: Grünecker Patent- und Rechtsanwälte PartG mbB

(56) References cited:
- JP-A- H11 115 816
- JP-A- 2012 176 750

## Description

### BACKGROUND OF THE INVENTION

### Field of the Invention

The present invention relates to a tractor which is an agricultural machinery. Especially, the present invention relates to an engine bonnet of the tractor.

### Related art of the Invention

As to an engine bonnet of a tractor which is an agricultural machinery, a configuration is known in which an attaching part for opening/closing of the engine bonnet is disposed in a rear side of the engine bonnet and a pivot shaft for opening/closing of the engine bonnet is disposed in a vehicle body side (for example, see Japanese Patent Application Publication No. Hei 11-115816).

### SUMMARY OF THE INVENTION

However, in a case where the engine bonnet is turned so as to open the front side of the engine bonnet widely, the rear end part of the engine bonnet hits the constructional parts of the vehicle body side, so that the angle to open is restricted.

The present invention furnishes a tractor which solves the above-described conventional problems.

The 1^{st} aspect of the present invention is a tractor, comprising:
an opening/closing support part (S) for an engine bonnet (8) which covers an engine (4), wherein
the opening/closing support part (S) comprises a supporting part (S1) of a vehicle body side and an attaching part (S2) of an engine bonnet side, and
the opening/closing support part (S) is disposed on an upper part of a rear side of the engine bonnet (8),
characterized in that the supporting part (S1) which protrudes toward a rear side portion of the engine bonnet (8) is provided with left-and-right pivot shafts (11 L, 11 R),
the attaching parts (S2) are rotatably attached to the left-and-right pivot shafts (11L, 11R) respectively so that a front side of the engine bonnet (8) may be opened/closed, and
a notch part (C) is formed on the rear side portion of the engine bonnet (8) so that the supporting part (S1) of the vehicle body side may be avoided.

The 2^{nd} aspect of the present invention is a tractor according to the 1^{st} aspect of the present invention,
further characterized in that the tractor comprises a partition plate (12) which partitions a rear side of an engine room (4a) that houses the engine (4), wherein
the partition plate (12) is provided with the supporting part (S1), and
a fuel tank (18) is disposed on a rear side of the partition plate (12).

The 3^{rd} aspect of the present invention is a tractor according to the 2^{nd} aspect of the present invention, wherein
the partition plate (12) has a protruding part (12a), which protrudes toward a front side of the vehicle body, as the supporting part (S1),
the partition plate (12) and the protruding part (12a) are integrally comprised of a same board, and
a part of the fuel tank (18) is allowed to enter into a rear side of the protruding part (12a).

### Advantageous Effects of the Invention

According to the 1^{st} aspect of the present invention, since the notch part (C) is formed on the rear side portion of the engine bonnet (8) so that the supporting part (S1) of the vehicle body side may be avoided, the rear side portion of the engine bonnet (8) does not hit the supporting part (S1) of the vehicle body side. By means of this, it becomes possible to open the front side of the engine bonnet (8) widely.

According to the 2^{nd} aspect of the present invention, since the partition plate (12), which partitions the rear side of the engine room (4a), is provided with the supporting part (S1) and the fuel tank (18) is disposed on the rear side of the partition plate (12), other parts to which the supporting part (S1) of the vehicle body side and the fuel tank (18) are fixed are unnecessary, because of use of the partition plate (12) constituted essentially.

According to the 3^{rd} aspect of the present invention, since the partition plate (12) has the protruding part (12a) which protrudes toward the front side of the vehicle body and the protruding part (12a) is used as the supporting part (S1) of the vehicle body side, the number of components can be reduced. In addition, since a part of the fuel tank (18) is allowed to enter into the rear side of the protruding part (12a), the capacity of a fuel tank (18) increases.

### BRIEF DESCRIPTION OF THE DRAWINGS

Fig.1 is a left side view of a tractor of an embodiment in the present invention;
Fig.2 is a perspective view of an engine circumference;
Fig.3 is a plan view of the engine circumference;
Fig.4 is a rear side view of an engine bonnet;
Fig.5 (a) is a perspective view of a state in which the engine bonnet is opened;
Fig.5 (b) is a sectional view of the front portion of the engine bonnet;
Fig.6 (a) is a perspective view of a front portion of the tractor,
Fig.6 (b) is a perspective view of the opening/closing support part of the rear part of the engine bonnet;
Fig.6 (c) is a sectional view of the opening/closing support part of the rear part of the engine bonnet;
Fig.7 is a right side view of a state in which the engine bonnet is closed;
Fig.8 is a right side view of a state in which the engine bonnet is opened;
Fig.9 is a perspective view of a partition plate and a fuel tank;
Fig.10 is a perspective view of the engine;
Fig. 11 is a left side view of the partition plate, the fuel tank and a dashboard; and
Fig.12 is a bottom view of a radiator.

### Description of Symbols

- C: Notch part of engine bonnet
- S: Opening/closing support part
- S1: Supporting part of a vehicle body side
- S2: Attaching part of an engine bonnet side
- 4: Engine
- 4a: Engine room
- 8: Engine bonnet
- 11L: Left pivot shaft
- 11R: Right pivot shaft
- 12: Partition plate
- 12a: Projection (Protruding part) of partition plate
- 18: Fuel tank

### PREFERRED EMBODIMENTS OF THE INVENTION

In the following, referring to the drawings, descriptions are given in detail regarding embodiments in the present invention.

In the following, the front-and-rear direction is referred to as the front-and-rear direction of the tractor 1. Furthermore, the front-and-rear direction is referred to as the movement direction on the occasion when the tractor 1 moves straight on, the movement direction frontward side is said to be the front-and-rear direction front side, and the movement direction rearward side is said to be the front-and-rear direction rear side. The movement direction of the tractor 1 is referred to as the direction from the operating seat 2 of the tractor 1 toward the steering wheel 3 at the time when the tractor 1 moves straight on, the steering wheel side becomes the front side, and the operating seat side becomes the rear side.

In addition, the vehicle width direction is referred to as the direction which is orthogonal to the front-and-rear direction in a horizontal face. Here, the right side in a state where the front-and-rear direction front side is viewed is said to be the vehicle width direction right side, and the left side in a state where the front-and-rear direction front side is viewed is said to be the vehicle width direction left side. In addition, the vertical direction is referred to as the direction which is orthogonal to the front-and-rear direction and the vehicle width direction. Therefore, the front-and-rear direction, the vehicle width direction and the vertical direction are orthogonal to each other.

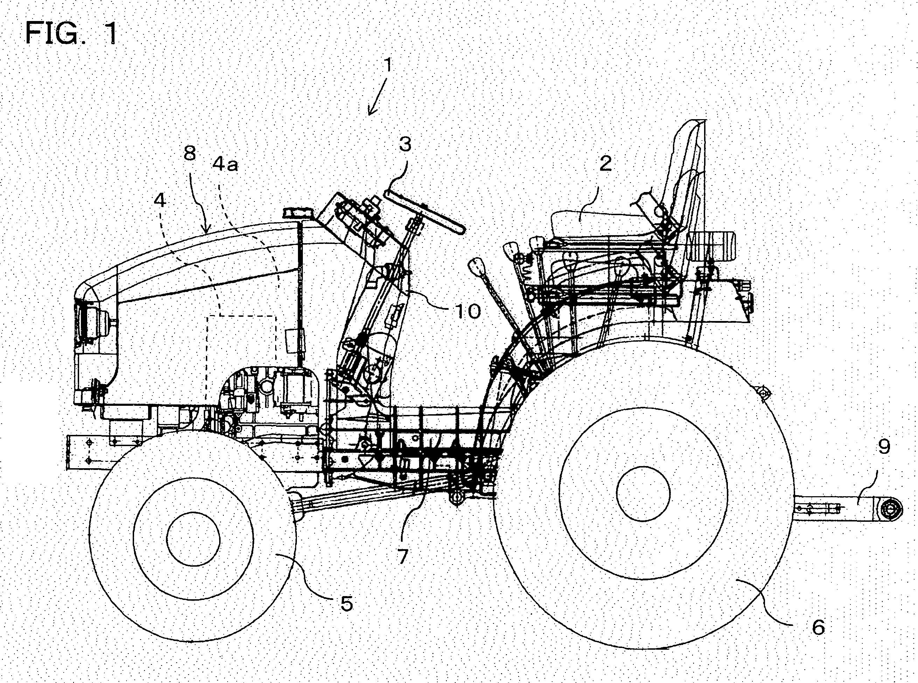

Fig.1 is a whole left side view of the tractor 1 of the present embodiment 1. The tractor 1 is a work vehicle such as a tractor for agriculture and so on, which works in the farm field and the like while travelling by using power which is generated by the power source 4 (an engine). The tractor 1 comprises the front wheels 5, the rear wheels 6, the engine 4 as a power source and the transmission (speed change device) 7. The front wheels 5 are mainly provided as the wheels for steerage. The rear wheels 6 are mainly provided as the wheels for driving. The rotational power, which is generated by the engine 4 that is disposed in the engine room 4a in the engine bonnet 8 of the front part of the vehicle body, is suitably slowed down with the transmission (speed change device) 7 and is transmitted to the rear wheels 6, so that the rear wheels 6 generate the driving power by using the rotational power. In addition, the transmission (speed change device) 7 can transmit the rotational power which is generated by the engine 4 also to the front wheels 5 if needed, and in this case, the front wheels 5 and the rear wheels 6 become the wheels for driving and generate the driving power.

That is, the transmission 7 is configured so as to select any one of a two-wheel-drive system and a four-wheel drive system. The rotational power of the engine 4 is slowed down with the transmission 7 and the slowed down rotational power can be transmitted to the front wheels 5 and the rear wheels 6. In addition, the tractor 1 is provided with the connecting device 9 which can connect the accessory implement such as a rotary (not shown) and the like to the rear part of the vehicle body. The connecting device 9 comprises, for example, the three-point linkage with the left-and-right lower link, the center top link and the like. The accessory implement is connected to the rear part of the vehicle body of the tractor 1 by using the three-point linkage.

By turning the left-and-right lifting arms (not shown) with hydraulic pressure, the accessory implement can be allowed to raise and lower via the lift rod (not shown), the lower link connected to the lift rod and the like. The steering wheel 3 is installed in a standing manner from the dashboard 10 which is disposed at the front side of the driver's seat 2. The clutch pedal is disposed on the floor on the left-hand side of the dashboard 10, the left-and-right brake pedals are disposed on the floor on the right-hand side of the dashboard 10 and the accelerator pedal is disposed on the floor on the right-hand side of the left-and-right brake pedals. In addition, the various kinds of control levers, which are various kinds of control pedals, the speed-changing lever and the like, are arranged around the driver's seat 2. In addition, the forward/backward movement lever is disposed on the left-hand side under the steering wheel 3, and the accelerator lever and the like are disposed on the right-hand side under the steering wheel 3.

The engine bonnet 8 will be described below.

The opening/closing support part S for the engine bonnet 8 which covers the engine comprises a supporting part S1 of the vehicle body side and an attaching part S2 of the engine bonnet side. The supporting part S1 is provided with left-and-right pivot shafts 11L and 11R. In addition, the attaching parts S2 and S2 are rotatably attached to the left-and-right pivot shafts 11L and 11R respectively so that the front side of the engine bonnet 8 may be opened/closed.

A notch part C is formed on the rear end part of the engine bonnet 8 so that the supporting part S1 of the vehicle body side may be avoided in plan view. Then the rear end part of the engine bonnet 8 does not hit the supporting part S1 of the vehicle body side. By means of this, it becomes possible to open the front side of the engine bonnet 8 widely.

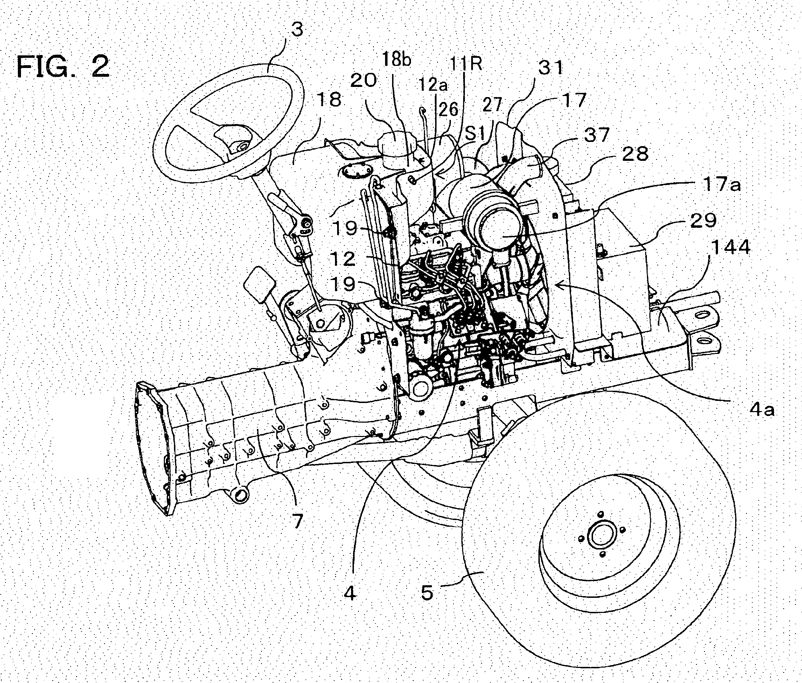

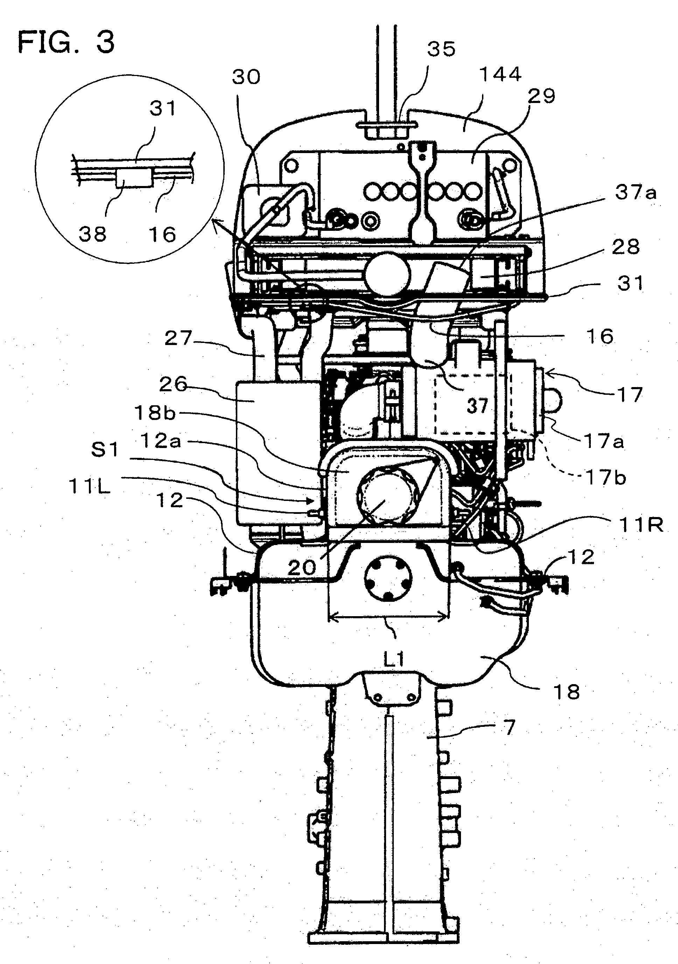

A left pivot shaft 11 L which is located in the left-and-right direction is disposed on the left side of the opening/closing support part S, and a right pivot shaft 11R which is located in the left-and-right direction is disposed on the right side of the opening/closing support part S. The engine bonnet 8 is configured so as to be opened/closed about the left-and-right pivot shafts 11L and 11R. Fig.2 is a perspective view of an engine circumference in a state where the engine bonnet 8 is detached, and Fig.3 is a plan view of the engine circumference in the state where the engine bonnet 8 is detached.

As shown in Figs.2, 3 and 9, a partition plate 12 is disposed between the engine room 4a and the rear part of the vehicle body. The partition plate 12 is provided with a projection (protruding part) 12a which protrudes toward a front side of the vehicle body. The projection 12a is the supporting part S1 of the vehicle body side. By means of this, other parts to which the supporting part S1 is fixed are unnecessary.

The projection 12a and the partition plate 12 are integrally configured with a metal plate. By means of this, the number of components is reduced, and as a result, the configuration becomes inexpensive.

As shown in Fig.3, the projection 12 a has a width L1 in the left-and-right direction, a left pivot shaft 11L is disposed on the left side of the projection 12 a , and a right pivot shaft 11 R is disposed on the right side of the projection 12 a .

Incidentally, the projection 12 a may be configured with different plates (for example, left-and-right plates or a convex-like plate), which are different from the partition plate 12, and the projection 12a and the partition plate 12 may be integrally attached by welding or the like. In a case where the left-and-right plates is welded to the partition plate 12, it is necessary to keep the width L1 in the left-and-right direction between the left-and-right plates, the left plate is provided with the left pivot shaft 11L and the right plate is provided with the right pivot shaft 11R. In a case where the convex-like plate is welded to the partition plate 12, it is necessary to keep the width L1 in the left-and-right direction, the left pivot shaft 11L is disposed on the left side of the convex-like plate and the right pivot shaft 11R is disposed on the right side of the convex-like plate.

On the other hand, the engine bonnet 8 is provided with the attaching parts S2 of the engine bonnet side, and the attaching parts S2 will be described below.

It is necessary to configure the left-and-right hole members which are rotatably attached to the left-and-right pivot shafts 11L and 11 R, respectively, Details of the left-and-right hole members will be described later.

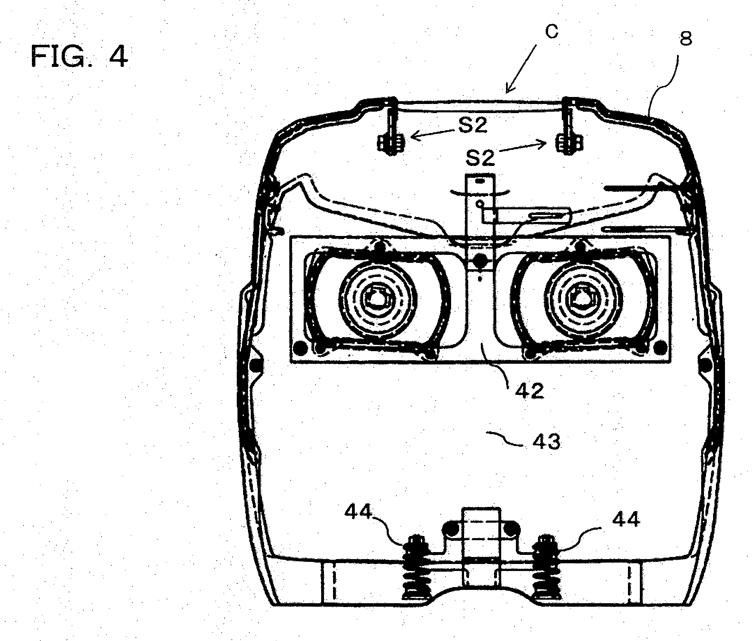

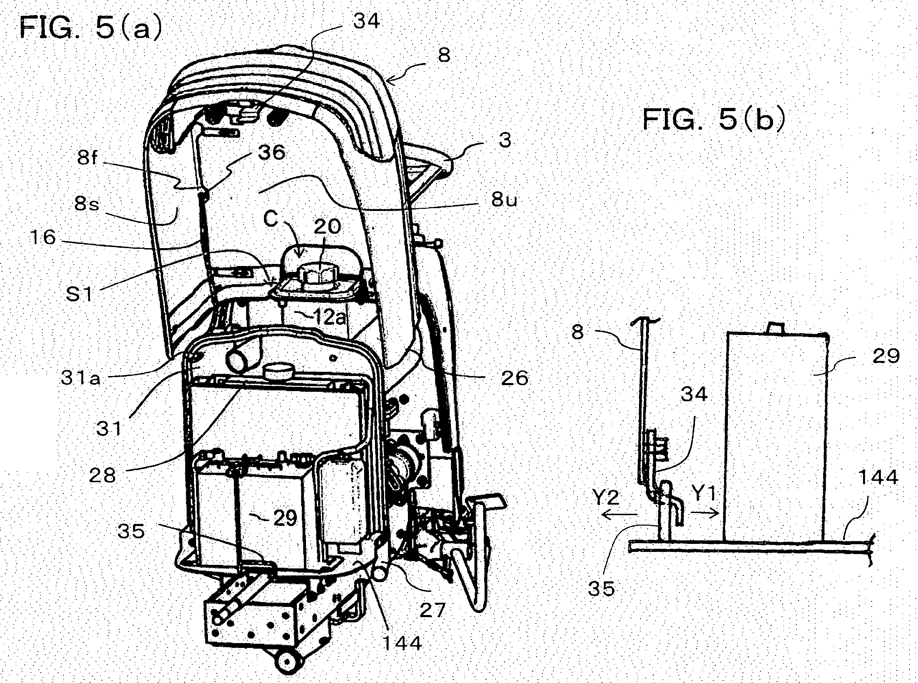

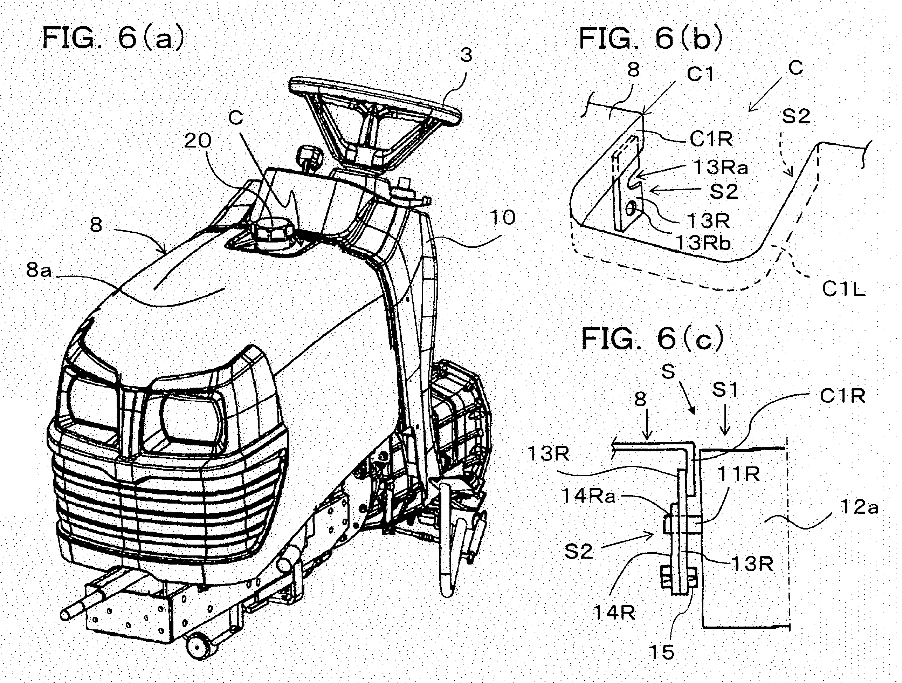

Fig.4 is a rear side view of the engine bonnet 8 which can be viewed from the rear side of the vehicle body. Since Fig.5 (a) is a perspective view of a state in which the engine bonnet is opened and viewed from the front side of the vehicle body, the engine bonnet 8 of Fig.5 (a) is viewed from the bottom side of the engine bonnet 8. In addition, Fig.6 (a) is a perspective view of the engine bonnet 8 viewed from the front side of the vehicle body.

In addition, since the light cover 42 and the light grill 43 are integrally configured with the resin material, the number of components can be reduced.

In addition, the lower part of the front side of the engine bonnet 8 is provided with a spring plate 34. In a case where the engine bonnet 8 is lowered downward to be closed, the spring plate 34 is caught by the lock bar 35. Fig.5 (b) shows a state where the spring plate 34 is caught by the lock bar 35. Since the spring plate 34 acts so as to always return in the direction of the arrow Y1, the spring plate 34 is not detached from the lock bar 35. In a case where power is given to the spring plate 34 in the direction of arrow Y2 by the operator's hand, the spring plate 34 is detached from the lock bar 35, so that the engine bonnet 8 becomes able to be rotated in the direction in which the engine bonnet 8 is lifted up.

The compression springs 44 and 44 are disposed on both the sides of the spring plate 34. In a case where the engine bonnet 8 is closed, the left-and-right compression springs 44 and 44 abut against the front part plate 144 (see Figs.2 and 3) and become in a state in which the left-and-right compression springs 44 and 44 are compressed to some extent, and as a result, the power in which the spring plate 34 is caught by the lock bar 35 becomes strong. By means of this, the engine bonnet 8 is in the state where it is closed and the state is maintained certainly.

A notch part C is formed on the center rear end part of the upper face part 8a of the engine bonnet 8. The notch part C is shaped concavely. Fig.6 (b) denotes a partial enlarged view of the notch part C.

The projection 12a is disposed in the notch part C which is shaped concavely. That is, the notch part C is formed on the engine bonnet 8 so that the projection 12a may be avoided. Further, a bending part C1 is formed in all the circumference of the notch part which is shaped concavely.

A right attaching plate 13R is fixed to a right side bending part C1 R of the bending part C1 by welding. The right attaching plate 13R is provided with a concave part 13Ra into which the right pivot shaft 11R is inserted. After the right pivot shaft 11R is inserted into the concave part 13Ra of the right attaching plate 13R, a hole part 14Ra of a right fixing plate 14R is inserted into the right pivot shaft 11R and then the right attaching plate 13R and the right fixing plate 14R are tightened and fixed by the bolt-and-nut member 15R. Fig.6 (c) denotes a sectional view of this configuration. A description of the left pivot shaft 11L is omitted, because the left pivot shaft 11L has the same configuration as the aforesaid configuration about attaching of the right pivot shaft 11 R.

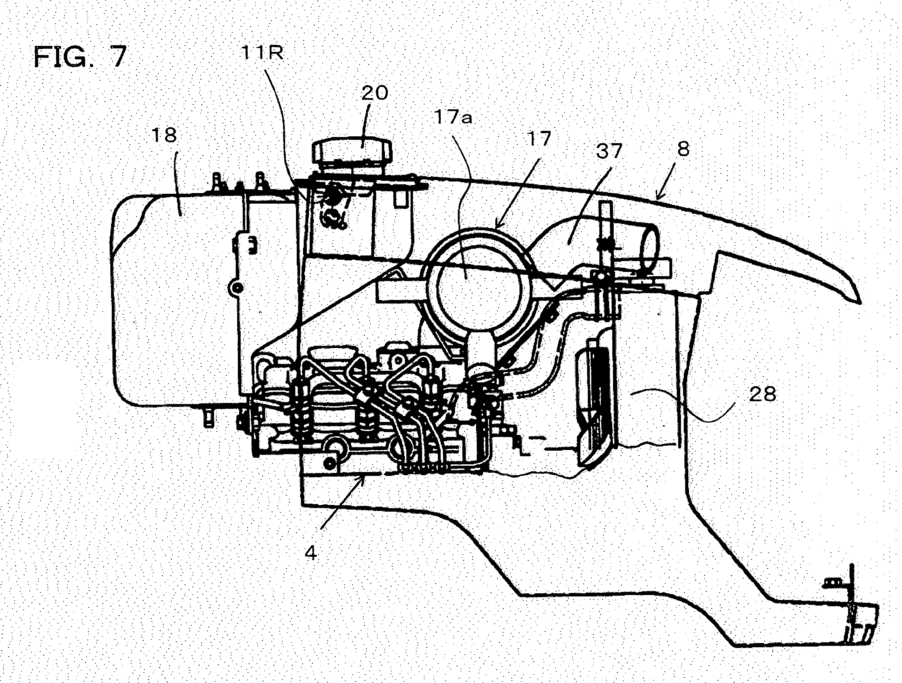

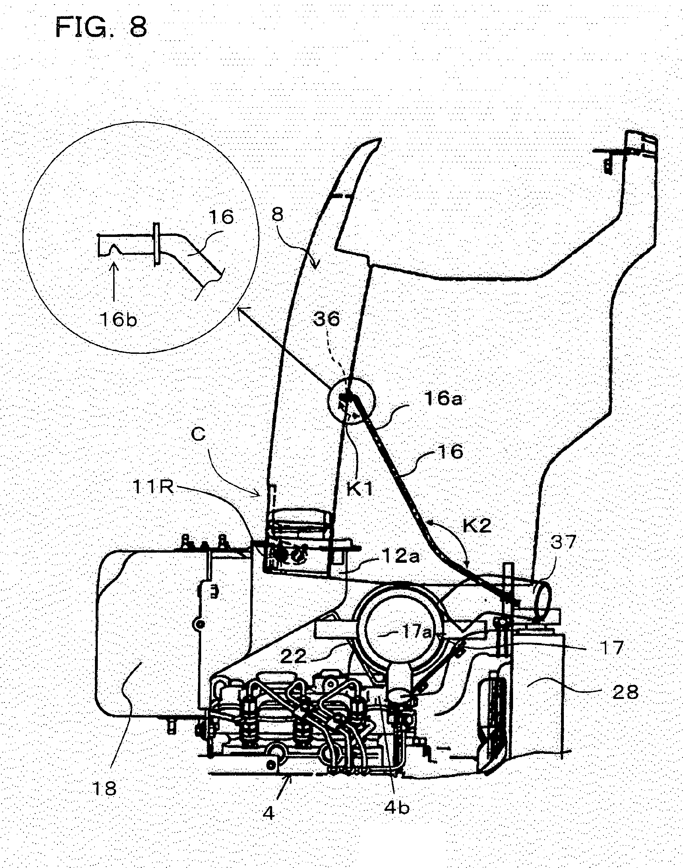

As described above, the partition plate 12 has the projection 12a which protrudes toward the front side of the vehicle body, the left pivot shaft 11L is disposed on the left side of the projection 12 a , and the right pivot shaft 11R is disposed on the right side of the projection 12a. The notch part C is formed on the engine bonnet 8 so that the projection 12 a may be avoided in plan view. By means of this, in a case where the engine bonnet 8 is opened upward about the left-and-right pivot shafts 11L and 11R, the engine bonnet 8 can be rotated until the engine bonnet 8 crosses the vertical direction and the upper face part 8a hits the partition plate 12, because the rear end part of the engine bonnet 8 does not hit the projection 12a which supports the left-and-right pivot shafts 11L and 11R. Here, as shown in Fig.8, the engine bonnet 8 is configured so as to be supported and fixed by the fixation rod 16 in a state where the engine bonnet 8 is opened approximately vertically. Fig.7 denotes a state in which the engine bonnet 8 is closed.

As shown In Figs.5 and 8, the fixation rod 16 is inserted in the hole 36 formed on the engine bonnet 8, and the angle K1 between the inserted part and the part 16a extended to the other end side (that is, the front side of the vehicle body) of the fixation rod 16 is constituted as an obtuse angle. By means of this configuration, it becomes possible to open the front side of the engine bonnet 8 widely. In addition, the fixation rod 16 is provided with a notch part 16b. Then, in a case where the fixation rod 16 is inserted in the hole 36 formed on the engine bonnet 8, the hole 36 is hung with the notch part 16b, and as a result, the fixation rod 16 becomes hard to detach.

Since the hole 36 formed on the engine bonnet 8 is formed on a flange 8f which connects an upper part engine bonnet 8u and a side part engine bonnet 8s which configure the engine bonnet 8, other parts which are to be needed when forming the hole 36 on the engine bonnet 8 are unnecessary.

In addition, the other end side (that is, the front side of the vehicle body) of the fixation rod 16 is inserted in a hole 31a of a front partition plate 31 (see Fig.5). The hole 31a of the front partition plate 31 has the diameter 1.5 times as large as the diameter of the fixation rod 16. By means of this, since the flexibility of each motion in the up-and-down direction, the front-and-rear direction and left-and-right direction of the fixation rod 16 becomes large, handling of the fixation rod 16 becomes easy. At the portion where the fixation rod 16 is inserted in the hole 31a of the front partition plate 31, the bending angle of the fixation rod 16 is formed as an obtuse angle, so that handling of the fixation rod 16 becomes easy.

In addition, by the angle K2 of the fixation rod 16 (see Fig.8), the angle at the time when the engine bonnet 8 is opened can be decided. In other words, the angle at the time when the engine bonnet 8 is opened depends on the angle K2 of the fixation rod 16.

Fig.3 also shows a storing state of the fixation rod 16, in which the fixation rod 16 is not used. Since the fixation rod 16 is stored so that an air cleaner duct 37 made from the resin material may be pressed from the upper side when the fixation rod 16 is not used, the vibration of the air cleaner duct 37 can be reduced. In addition, since the air cleaner duct 37 is made from the resin material, the vibration of the fixation rod 16 can be reduced, too. The air cleaner duct 37 sends ambient air to the housing case for the air cleaner 17.

In addition, the front partition plate 31 is provided with an annular catch member 38 made from the resin material (see Fig.3), and when the fixation rod 16 is in the storing state, the fixation rod 16 is caught by the catch member 38 to be fixed.

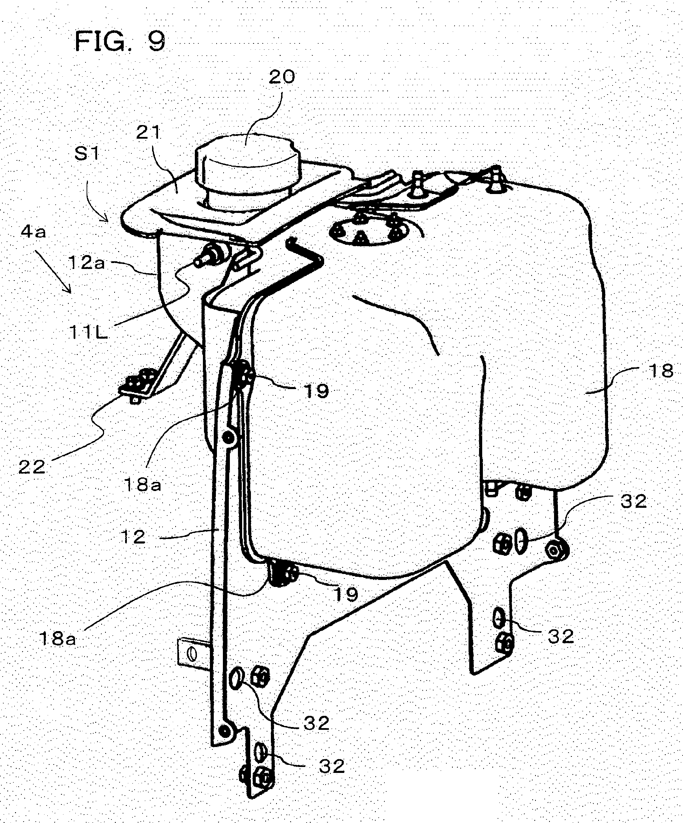

Fig.9 is a perspective view of the fuel tank 18 viewed from the left back side of the vehicle body. As shown in Figs.9 and 2, the fuel tank 18 is fixed to the rear side of the partition plate 12. By means of this, other part to which the fuel tank (18) is fixed is unnecessary except for the partition plate 12.

A flange part 18a of the fuel tank 18 and the partition plate 12 are tightened and fixed by the bolt-and-nut member 19. That is, the fuel tank 18 is fixed to the partition plate 12 at two positions of the left side of the fuel tank 18 and at two positions of the right side thereof. Fig.9 denotes the bolt-and-nut members 19 of the two positions of the left side, and Fig.2 denotes the bolt-and-nut members 19 of the two positions of the right side.

A fuel tank projection (fuel tank protruding part) 18b is disposed at the center front side portion of the fuel tank 18. And the fuel tank projection 18b which is a part of the fuel tank 18 is allowed to enter into the rear side of the projection 12a of the partition plate 12 (see Figs.2 and 3). By means of this, the capacity of a fuel tank 18 increases.

The fuel tank projection 18b is provided with a cap 20. Fig.9 denotes a fuel tank cover 21 which covers the fuel tank 18, but Fig.2 does not denote the fuel tank cover 21. The fuel tank cover 21 is disposed so that the fuel tank 18 cannot be directly seen from the notch part C of the engine bonnet 8. The fuel tank 18 may be configured with the metal plate or the resin.

In addition, as shown in Figs.8 and 9, a front support stay 22 is disposed between a lower side of the projection 12a of the partition plate 12 and a cylinder head 4b of the engine 4. By means of this, the vibration of the partition plate 12 or the fuel tank 18 is reduced, and the load of the fuel tank 18 at the time of a fuel full load is supported.

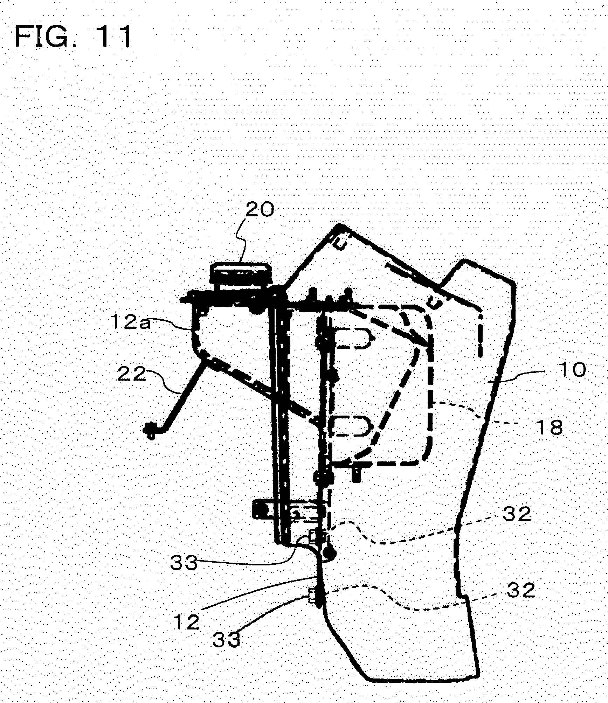

As shown in Fig.9, two holes 32 are formed on the left side of the lower part of the partition plate 12, and two holes 32 are formed on the right side of the lower part of the partition plate 12, too. In addition, as shown in Fig.11, the lower part of the partition plate 12 is fixed to the lower part of the dashboard 10 by the bolt-and-nut members 33. By means of this, the support of the partition plate 12 becomes strong.

As shown in Fig.8, when the engine bonnet 8 is opened approximately vertically, it becomes in a state in which the approximate whole of the housing case for the air cleaner 17 can be seen. As shown in Figs.2 and 3, the housing case for the air cleaner 17 is located before the projection 12a of the partition plate 12. The housing case for the air cleaner 17 is cylindrical and the longitudinal direction thereof corresponds to the left-and-right direction of the vehicle body. An air cleaner element 17b is housed in the housing case for the air cleaner 17. A housing lid 17a is located at the right side of the housing case for the air cleaner 17. By removing of the housing lid 17a, attachment and detachment of the air cleaner element 17b which is housed in the housing case for the air cleaner 17 can be performed from the right side of the vehicle body.

As described above, when the engine bonnet 8 is opened approximately vertically, it becomes in a state in which the approximate whole of the housing case for the air cleaner 17 can be seen. Therefore, attachment and detachment of the housing lid 17a of the housing case for the air cleaner 17 can be performed easily without being disturbed by the engine bonnet 8, and attachment and detachment of the air cleaner element 17b which is housed in the housing case for the air cleaner 17 can be performed easily without being disturbed by the engine bonnet 8. In addition, since an air inlet 17c of the housing case for the air cleaner 17 is disposed toward the front side of the vehicle body, it becomes easy to connect to an air cleaner duct 37.

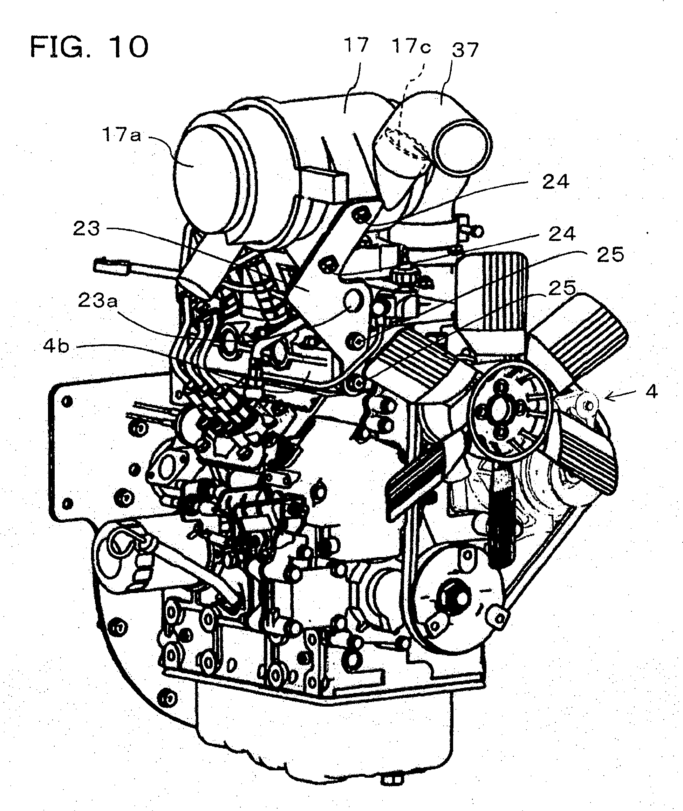

As shown in Fig.10, the housing case for the air cleaner 17 is installed on the upper part of the engine. Fig.10 is a perspective view of the engine 4 viewed from the right front side of the vehicle body. An air cleaner supporting stay 23 is fixed to the front side of the housing case for the air cleaner 17 by the bolt-and-nut members 24. The lower side of the air cleaner supporting stay 23 is fixed to the front side of a cylinder head 4b by the bolt-and-nut members 25.

In addition, a hole 23a is formed on the air cleaner supporting stay 23. In a state where the housing case for the air cleaner 17 is removed from the air cleaner supporting stay 23, the hole 23a of the air cleaner supporting stay 23 can be used as a hanger which hangs and moves the engine 4.

As shown in Figs.2, 3 and 5, a muffler 26 is disposed on the left side space of the projection 12a of the partition plate 12, and the muffler 26 is provided with an exhaust tube 27 which extends toward the lower part of the vehicle body. A radiator 28 is disposed on the front side space of the housing case for the air cleaner 17, and the front partition plate 31 exists between the radiator 28 and the housing case for the air cleaner 17. A battery 29 is disposed on the front side space of the radiator 28. A cooling water sub-tank 30 for the engine 4 is disposed on the left side space of the battery 29.

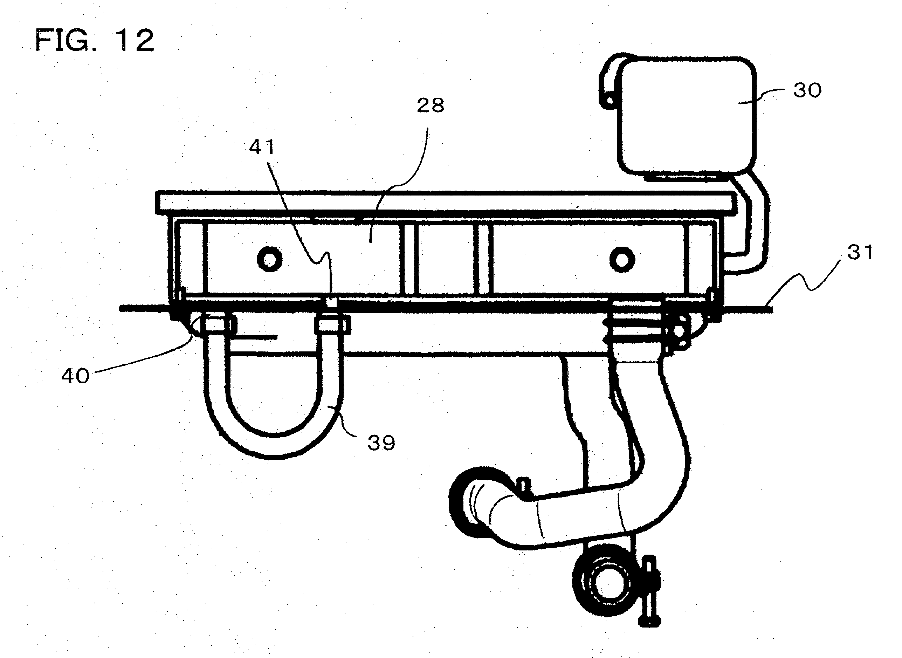

Fig.12 is a bottom view of the radiator 28 viewed from the bottom side of the vehicle body. A drain hose 39 is attached to a drain opening 41 which discharges the cooling water in the radiator 28. The other end portion of the drain hose 39 is inserted to a projection (protruding part) 40. By means of this, when the other end portion of the drain hose 39 is detached from the projection 40, the cooling water in the radiator 28 can be discharged easily.

The feature of the tractor according to the present invention is useful for an agricultural machine such as a tractor and the like, and also a general vehicle.

## Claims

1. A tractor, comprising:
an opening/closing support part (S) for an engine bonnet (8) which covers an engine (4), wherein
the opening/closing support part (S) comprises a supporting part (S1) of a vehicle body side and an attaching part (S2) of an engine bonnet side, and
the opening/closing support part (S) is disposed on an upper part of a rear side of the engine bonnet (8),
**characterized in that** the supporting part (S1) which protrudes toward a rear side portion of the engine bonnet (8) is provided with left-and-right pivot shafts (11 L, 11 R),
the attaching parts (S2) are rotatably attached to the left-and-right pivot shafts (11L, 11R) respectively so that a front side of the engine bonnet (8) may be opened/closed, and
a notch part (C) is formed on the rear side portion of the engine bonnet (8) so that the supporting part (S1) of the vehicle body side may be avoided.

2. The tractor according to claim 1,
further **characterized in that** the tractor comprises a partition plate (12) which partitions a rear side of an engine room (4a) that houses the engine (4), wherein
the partition plate (12) is provided with the supporting part (S1), and
a fuel tank (18) is disposed on a rear side of the partition plate (12).

3. The tractor according to claim 2, wherein
the partition plate (12) has a protruding part (12a), which protrudes toward a front side of the vehicle body, as the supporting part (S1),
the partition plate (12) and the protruding part (12a) are integrally comprised of a same board, and
a part of the fuel tank (18) is allowed to enter into a rear side of the protruding part (12a).

## Patentansprüche

1. Traktor, der umfasst:
einen Trägerteil (S) zum Öffnen/Schließen einer Motorhaube (8), die einen Motor (4) abdeckt, wobei
der Trägerteil (S) zum Öffnen/Schließen einen Trageteil (S1) an einer Seite des Fahrzeugaufbaus sowie einen Anbringungsteil (S2) an einer Seite der Motorhaube umfasst, und
der Trägerteil (S) zum Öffnen/Schließen an einem oberen Teil einer hinteren Seite der Motorhaube (8) angeordnet ist,
**dadurch gekennzeichnet, dass** der Trageteil (S1), der zu einem Abschnitt an der hinteren Seite der Motorhaube (8) hin vorsteht, mit einer linken und einer rechten Schwenkwelle (11 L, 11 R) versehen ist,
die Anbringungsteile (S2) drehbar an der linken beziehungsweise der rechten Schwenkwelle (11L, 11 R) angebracht sind, so dass eine Vorderseite der Motorhaube (8) geöffnet/geschlossen werden kann, und
ein Aussparungsteil (C) an dem Abschnitt an der hinteren Seite der Motorhaube (8) ausgebildet ist, so dass dem Trageteil (S1) an der Seite des Fahrzeugaufbaus ausgewichen werden kann.

2. Traktor nach Anspruch 1,
des Weiteren **dadurch gekennzeichnet, dass** der Traktor eine Trennplatte (12) umfasst, die eine hintere Seite eines Motorraums (4a) unterteilt, der den Motor (4) aufnimmt, wobei
die Trennplatte (12) mit dem Trageteil (S1) versehen ist, und
ein Kraftstofftank (18) an einer hinteren Seite der Trennplatte (12) angeordnet ist.

3. Traktor nach Anspruch 2, wobei
die Trennplatte (12) einen vorstehenden Teil (12a), der zu einer vorderen Seite des Fahrzeugaufbaus hin vorsteht, als den Trageteil (S1) aufweist,
die Trennplatte (12) und der vorstehende Teil (12a) integral aus ein und derselben Platte bestehen, und
ein Teil des Kraftstofftanks (18) in eine hintere Seite des vorstehenden Teils (12a) eingeführt werden kann.

## Revendications

1. Tracteur comprenant :
une partie support d'ouverture/fermeture (S) pour un capot de moteur (8) qui recouvre un moteur (4), dans lequel
la partie support d'ouverture/fermeture (S) comprend une partie support (S1) du côté carrosserie du véhicule et une partie de fixation (S2) du côté capot du moteur, et
la partie support d'ouverture/fermeture (S) est disposée sur la partie supérieure du côté arrière du capot de moteur (8),
**caractérisé en ce que** la partie support (S1) qui fait saillie vers la partie de côté arrière du capot de moteur (8) est munie d'arbres de pivotement gauche et droit (11L, 11R),
les parties de fixation (S2) sont respectivement fixées de manière rotative aux arbres de pivotement gauche et droit (11L, 11R) de sorte que le côté avant du capot de moteur (8) peut être ouvert/fermé, et
une partie d'encoche (C) est formée sur la partie de côté arrière du capot de moteur (8) de sorte que la partie support (S1) du côté de la carrosserie du véhicule peut être évitée.

2. Tracteur selon la revendication 1,
**caractérisé en outre en ce que** le tracteur comprend une plaque de séparation (12) qui sépare le côté arrière du compartiment moteur (4a) qui contient le moteur (4), dans lequel
la plaque de séparation (12) est munie de la partie support (S1), et
un réservoir de carburant (18) est disposé du côté arrière de la plaque de séparation (12).

3. Tracteur selon la revendication 2, dans lequel la plaque de séparation (12) comporte une partie en saillie (12a) qui fait saillie vers le côté avant de la carrosserie du véhicule, en tant que plaque support (S1),
la plaque de séparation (12) et la partie en saillie (12a) sont constituées d'un seul tenant d'une même plaque, et
une partie du réservoir de carburant (18) peut pénétrer dans le côté arrière de la partie en saillie (12a).
